# EUROPEAN PATENT SPECIFICATION

(11) **EP 3 964 071 B1**
(45) Date of publication and mention of the grant of the patent: **03.09.2025**
(21) Application number: 21190893.4
(22) Date of filing: 11.08.2021
(51) Int. Cl.: A21C 11/10, A21C 11/16

(54) **PASTA CUTTING MACHINE WITH LOAD SENSOR**
TEIGWARENSCHNEIDMASCHINE MIT LASTSENSOR
MACHINE DE DÉCOUPE DE PÂTES AVEC DÉTECTEUR DE CHARGE

(30) Priority: 02.09.2020 IT 202000020866
(43) Date of publication of application: 09.03.2022
(73) Proprietor: Landucci S.r.l., 51100 Pistoia (IT)
(72) Inventor: LANDUCCI, Angela, 51100 Pistoia (IT); LANDUCCI, Federica, 51100 Pistoia (IT); LANDUCCI, Lando, 51100 Pistoia (IT)
(74) Representative: Mannucci, Michele

(56) References cited:
- EP-A1- 1 576 883
- WO-A1-2014/087345
- CN-U- 202 603 568
- IT-B- 1 050 686
- JP-A- 2008 048 699
- US-A1- 2012 182 150
- US-A1- 2016 353 751

## Description

### TECHNICAL FIELD

The present invention relates to improvements to pasta making machines. Embodiments described herein in particular relate to machines for cutting pasta exiting from a die.

### BACKGORUND ART

Machines for cutting pasta exiting from a die are known for example from WO2014/087345. In these machines a chamber is provided for collecting pasta cut by a rotary cutting member, which cuts pasta coming from an overlying die. A belt conveyor is provided below the collection chamber, which discharges the pasta to the external of the cutting machine.

The Italian patent 1050686 discloses a pasta cutting machine, in which the pasta cut by a rotary blade is received in an annular collection chamber and discharged therefrom onto a chute. Similar configurations are disclosed in EP3114935.

The cutting machine must cooperate with the die and must be positioned correctly with respect thereto. This requires complex operations by the operator. Furthermore, during the operation, drawbacks which lead to the accidental accumulation of pasta between the die and the pasta collection chamber may arise. Given that the pasta is pushed out of the die at very high pressures, in order to allow extrusion, in case of operating problems considerable overloads may occur on the mechanical members of the cutting machine with the risk of damaging them.

It would therefore be beneficial to have a cutting machine capable of fully or partly overcoming one or more of the problems of machines of the state of the art.

### SUMMARY OF THE INVENTION

According to the invention, herein disclosed is a pasta cutting machine, comprising an operating unit in turn comprising: a cutting unit having a motor-driven rotary shaft with a rotation axis, to which a rotary knife or blade can be applied; a chamber for collecting pasta cut by the cutting unit, comprising a side wall surrounding the rotation axis of the rotary shaft of the cutting unit; wherein the collection chamber is open at the bottom to allow the dropping of cut pasta from the chamber; a conveyor device (which may for example comprise a chute for conveying by gravity or a conveyor belt) underlying the collection chamber, adapted to receive the pasta exiting from the collection chamber.

The cutting machine further comprises a substantially vertical supporting column, along which the operating unit is movable. The column is provided with guides to which a slide integral with the operating unit is engaged.

Furthermore, the cutting machine comprises an actuation device for controlling the vertical movement of the operating unit along the column. According to the invention, the actuation device comprises a threaded bar supported on the column and extending longitudinally therealong, driven in rotation by a motor, and on which a nut screw integral with the slide the operating unit meshes. A load sensor for detecting a load transmitted by the operating unit to the column is associated with the threaded bar.

In practical embodiments, the load sensor may be or may comprise a load cell.

The load sensor facilitates the operations for mutual positioning between the die and the cutting machine. Furthermore, the load sensor can generate a signal in case of overload due to an abnormal accumulation of pasta between the die and the cutting machine, preventing damage to the mechanical members. For example, a control unit can be interfaced to the load sensor and generate an alarm and/or stop the cutting machine and the die in case of overloads detected by the load sensor.

In practical embodiments, the threaded bar is housed in the column and preferably the guides on which the slide carrying the operating unit slides are arranged outside the column.

Basically, the threaded bar has an upper end and a lower end, which are supported on the column. Preferably, the motor for driving the threaded bar may be connected to the lower end of the threaded bar, where a thrust-bearing support may be provided. The load sensor can be associated with the thrust-bearing support.

In advantageous embodiments, the cutting machine may comprise an encoder for detecting the position of the slide with respect to the column. As will be clarified below, the encoder can facilitate relative positioning between the die and the cutting machine.

Also forming an object of the present invention is a pasta making equipment, comprising: a head for supporting a die and a cutting machine as defined above.

Further advantageous features and embodiments of the cutting machine are described hereinafter with reference to the attached drawings, and in the attached claims, which are an integral part of the present description.

### BRIEF DESCRIPTION OF THE DRAWINGS

The invention will be clearer from the description and the attached drawings, which illustrate an embodiment provided by way of non-limiting example of the invention. More particularly, in the drawings:
Figs.1 and 2 are axonometric views of the cutting machine in an embodiment;
Fig.3 is a plan view according to III-III of Fig.2;

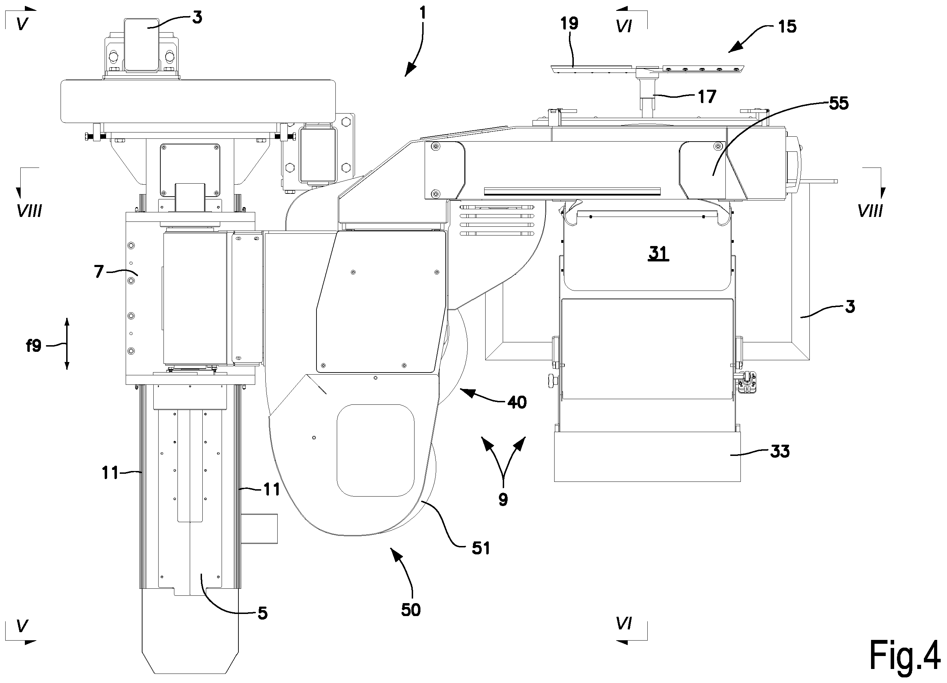

Fig.4 is a lateral view according to IV-VI of Fig.3;

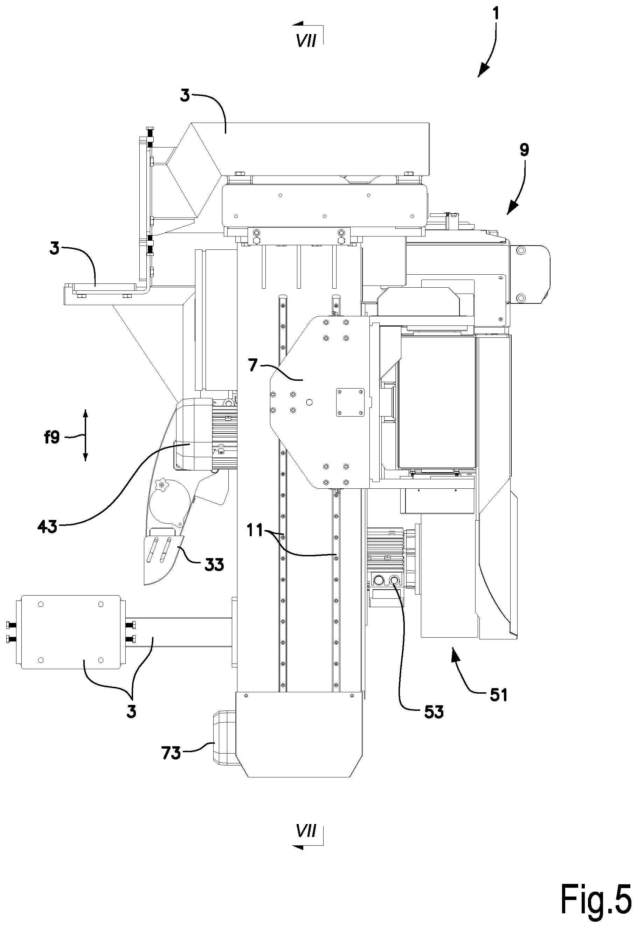

Fig.5 is a lateral view according to V-V of Fig.4;
Fig.6 is a cross-section according to VI-VI of Fig.4;
Fig.7A is a cross-section according to VII-VII of Fig.5;
Fig.7B is a cross-section according to a plane orthogonal to the plane of line VII-VII of Fig.5;
Fig.8 is a cross-section according to VIII-VIII of Figs.4 and 6;
Fig.9 is an axonometric view with parts removed;
Fig.10 is a cross-section according to a vertical plane of the cutting machine combined with a die in a first operative condition; and
Fig.11 is a cross-section similar to Fig.10 in a different operative condition.

### DETAILED DESCRIPTION

The attached figures show an embodiment of a cutting machine, indicated in its entirety with 1. The cutting machine 1 comprises anchoring brackets 3, with which it can be fixed to a wall or another bearing structure. A column 5, which is oriented vertically in the operating configuration is fixed to the brackets 3.

A slide 7, which carries a head or operating unit 9, is slidable along the vertical column 5. The slide 7 is guided along guides 11 integral with the column 5 and preferably arranged outside thereof. Members for vertically moving the operating unit 9 according to the vertical double arrow f9 are arranged inside the column 5. These members are described in greater detail below.

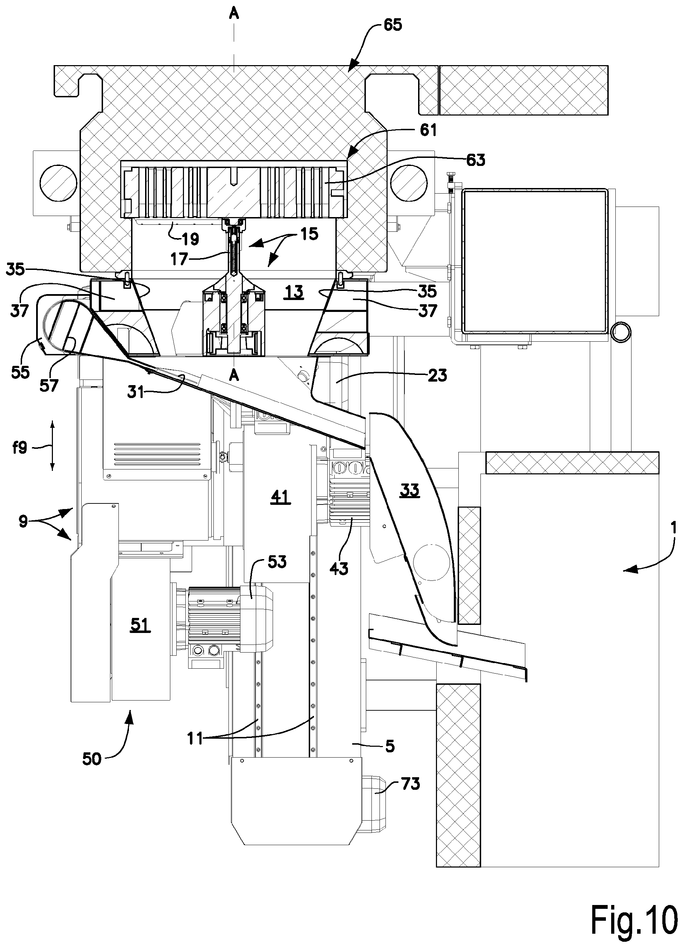

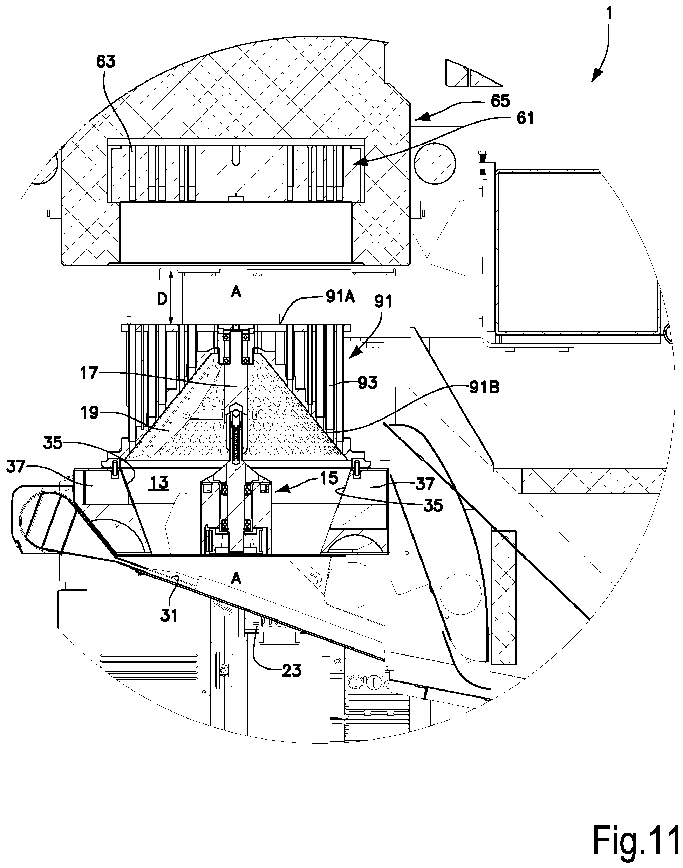

The operating unit 9 comprises a collection chamber 13, for example of substantially annular shape, adapted to collect the pasta cut by a cutting unit 15, coaxial to the annular chamber, upon exiting from a die, described in detail below with reference to Figs. 10 and 11.

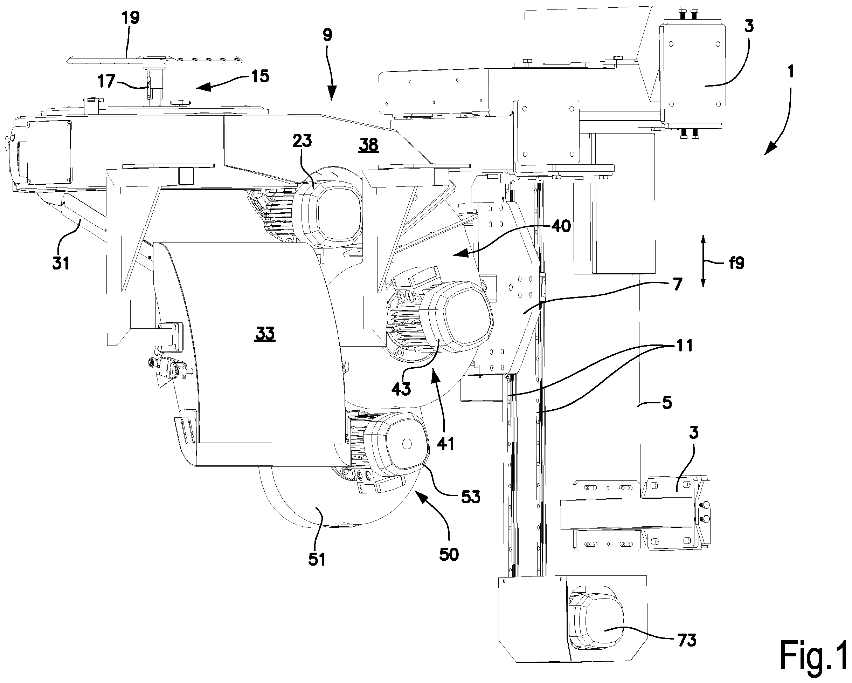

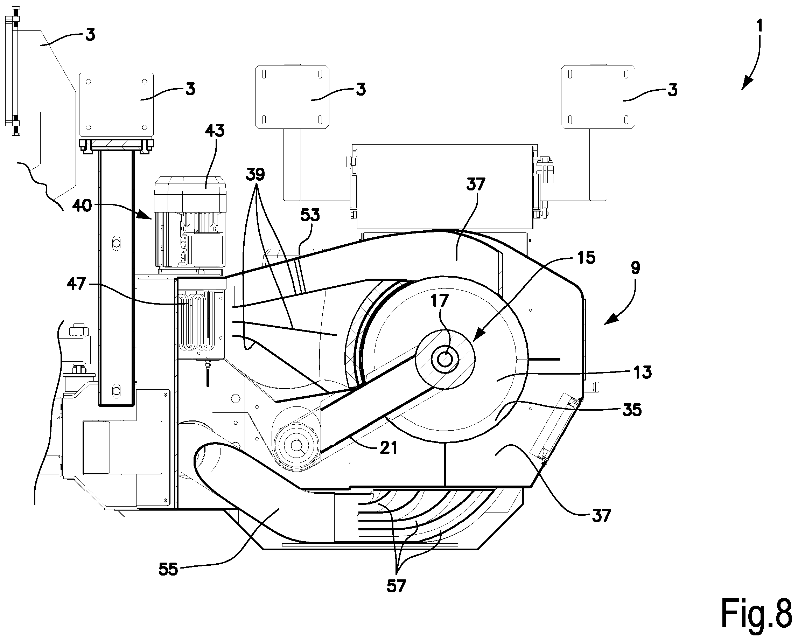

The cutting unit 15 comprises a rotary shaft 17 coaxial with the axis of symmetry of the collection chamber 13. An interchangeable rotary blade, shown in some of the attached figures and indicated with 19, can be associated with the rotary shaft 17. In the illustrated embodiment, the rotary shaft 17 is driven in rotation by means of a belt 21 driven by an electric motor 23 (see Figs.1 and 8).

As will be clarified with specific reference to Figs. 10 and 11, during use the collection chamber 13 and the cutting unit 15 cooperate with a die which continuously supplies the pasta to be cut. An intermediate member, which may vary depending on the shape of pasta to be cut and with which a respective interchangeable rotary knife or blade 19 cooperates, depending on the shape of pasta to be produced, may be interposed between the die and the knife or blade 19 of the cutting unit 15.

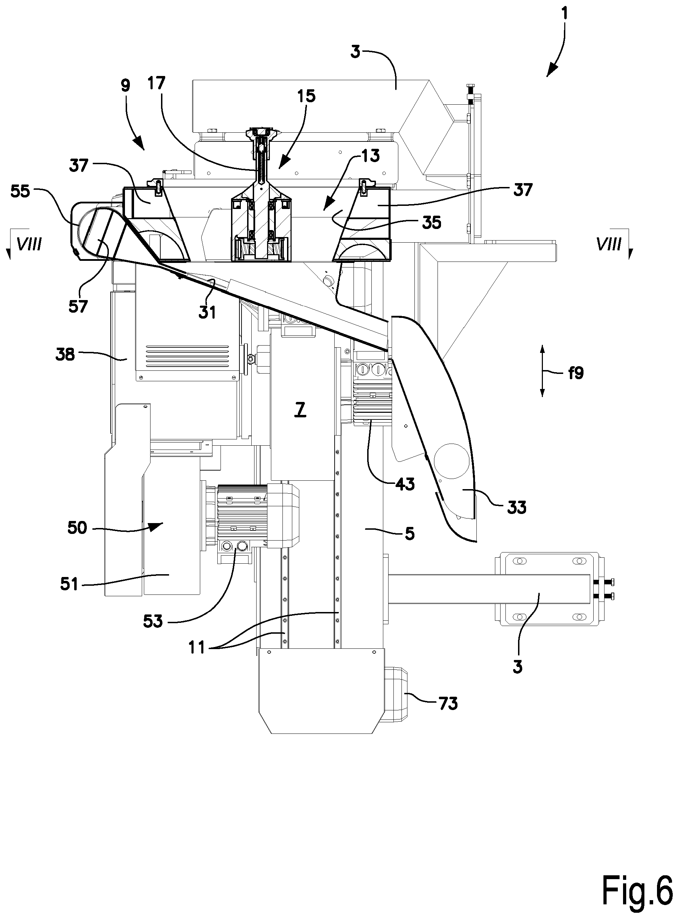

A conveyor device, comprising a conveyor chute 31 extending from an upper end to a lower end, is arranged beneath the collection chamber 13 for collecting the pasta cut by the cutting unit 15. The conveyor chute 31 is configured to collect the cut pasta, which drops by gravity from the collection chamber 13, and to convey it by gravity toward a downstream unit, generally indicated with 33, for example a shaker. To this end, the collection chamber 13 is open at the bottom and the cutting unit 15 is supported coaxially to the collection chamber 13 by means of radial spokes which leave a sufficient gap for the cut pasta to drop toward the conveyor chute 31, see in particular Fig.6. The cut pasta drops from the collection chamber 13 onto a drop surface, facing toward the collection chamber 13, of the conveyor chute 31.

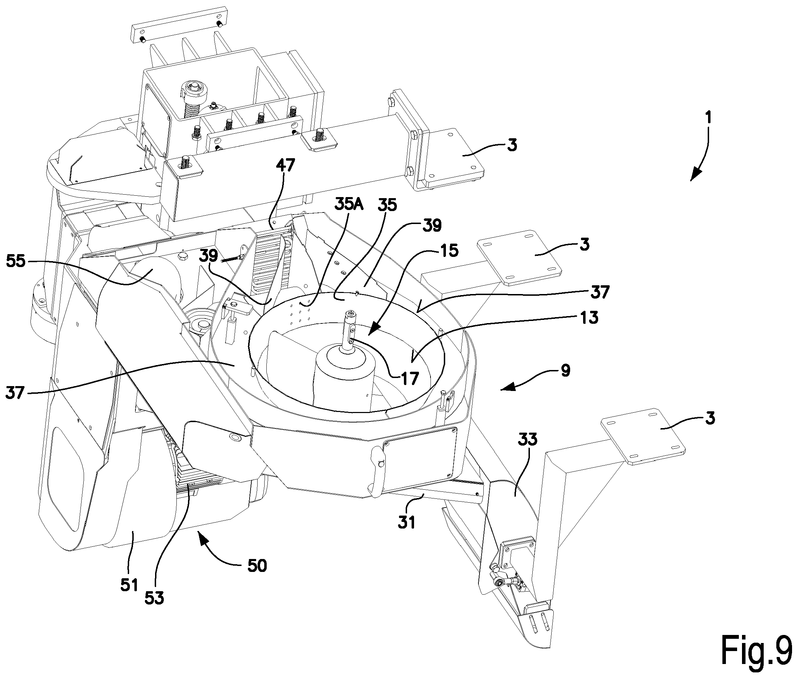

The collection chamber 13 is surrounded by a side wall 35. In the illustrated embodiment, the side wall 35 has a frusto-conical shape, tapered downwards, i.e., toward the conveyor chute 31. The side wall 35 apertured, i.e., it is provided with a plurality of openings for the through-flow of air, with the aim of allowing a correct exit of the pasta from the die toward the open bottom of the collection chamber 13. The openings are shown schematically and only partially in Fig.9, and indicated therein with 35A. It should be noted that the openings 35A are actually distributed uniformly over the entire surface of the frustoconical wall 35 laterally delimiting the collection chamber 13.

The collection chamber 13 is arranged in a plenum 37, part of a first channel for conveying a first air flow into the collection chamber 13 and toward the overlying die. Besides the plenum 37, the first channel comprises a duct 38 which supplies air toward the plenum 37.

In advantageous embodiments, first guide septa or diaphragms 39 are provided, in order to convey the air coming from the duct 38 in a substantially uniform manner in the entire plenum 37 and therefore around the entire side wall 35 and through it into the collection chamber 13. The guide septa or diaphragms 39 split the air flow coming from the duct 38, and more precisely from an air supply mouth at the end of the duct 38, into several partial flows, directed around the collection chamber 13. In the illustrated embodiment, as shown in particular in Figs. 8 and 9, three guide septa or diaphragms 39 are provided, which split the air flow coming from the duct 38 into four partial flows, conveyed so as to impact the entire side wall 35 in a tendentially uniform and balanced manner.

The air is supplied to the duct 38 by a first ventilation unit, indicated in its entirety with 40, and comprising a first fan 41, supported, together with the duct 38 and the plenum 37 with the respective guide septa or diaphragms 39, by the operating unit 9. An electric motor for driving the first fan 41 is indicated with 43.

A first air-conditioning system 47 (Figs.8 and 9) is arranged in the duct 38 and it may comprise a heating unit for heating the air to the desired temperature. The heating unit may comprise electrical resistors, or a heat exchanger, in which a thermal transfer fluid circulates, or any other suitable system.

In some embodiments, it may be foreseen that the first air-conditioning system 47 further comprises other members, for example means for controlling and/or modifying the moisture content of the air supplied along the duct 38 to the plenum 37 and therefrom into the collection chamber 13.

In advantageous embodiments, the machine 1 comprises a second ventilation unit 50, adapted to generate an air stream or flow which facilitates the conveying of the pasta along the conveyor chute 31. The second ventilation unit 50 comprises a second fan 51 driven by an electric motor 53. A channel comprising a duct 55, whose end part extends along the upper portion of the chute 31 is associated with the fan 51. As shown in particular in the section of Fig.8, the end part of the duct 55 forms a plenum extending along the upper end of the chute and therein containing guide septa or diaphragms 57, which are configured so as to convey an approximately uniform air flow over the entire width of the chute 31. The septa 57 extend from an air supply mouth toward the upper edge of the conveyor chute 31. In this manner, the pasta dropping on the chute 31 from the collection chamber 13 is impacted by an approximately uniform air flow irrespective of the transverse position in which it reaches the chute.

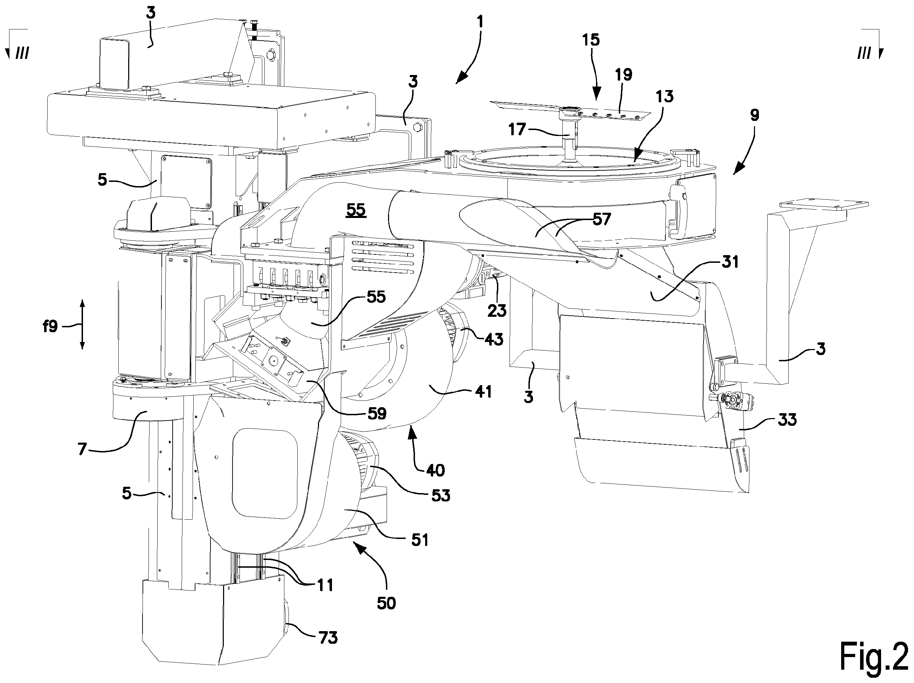

In advantageous embodiments, a second air-conditioning system 59 (Fig.2) is associated with the duct 55. Similarly to the first air-conditioning system 47, also the second air-conditioning system 59 may comprise a heating unit for heating the air to the desired temperature. The heating unit may comprise electrical resistors, or a heat exchanger, in which a thermal transfer fluid circulates, or any other suitable system. It may also be provided that the second air-conditioning system 59 further comprises other members, for example means for controlling and/or modifying the moisture content of the air supplied along the duct 55 to the chute 31.

Fig.10 shows a first operative position of the cutting machine 1 described heretofore, combined with a die 61. The die 61 is provided with a plurality of holes 63, in which inserts can be mounted to shape the pasta into the desired shape. The die 61 is mounted in a head 65. The die and the head 65 are per se known and will not be described in detail.

In the example of use of Fig.10, a rotary knife or rotary blade 19 having a cutting edge substantially orthogonal to the rotation axis A-A of the rotary shaft 17 is used. The blade 19 cooperates directly with the lower surface of the die 61. The position of the head or operating unit 9 of the cutting machine 1 is defined by the abutment of the upper surface of the operating unit 9, overlying the collection chamber 13, against the head 65 in which the die 61 is mounted.

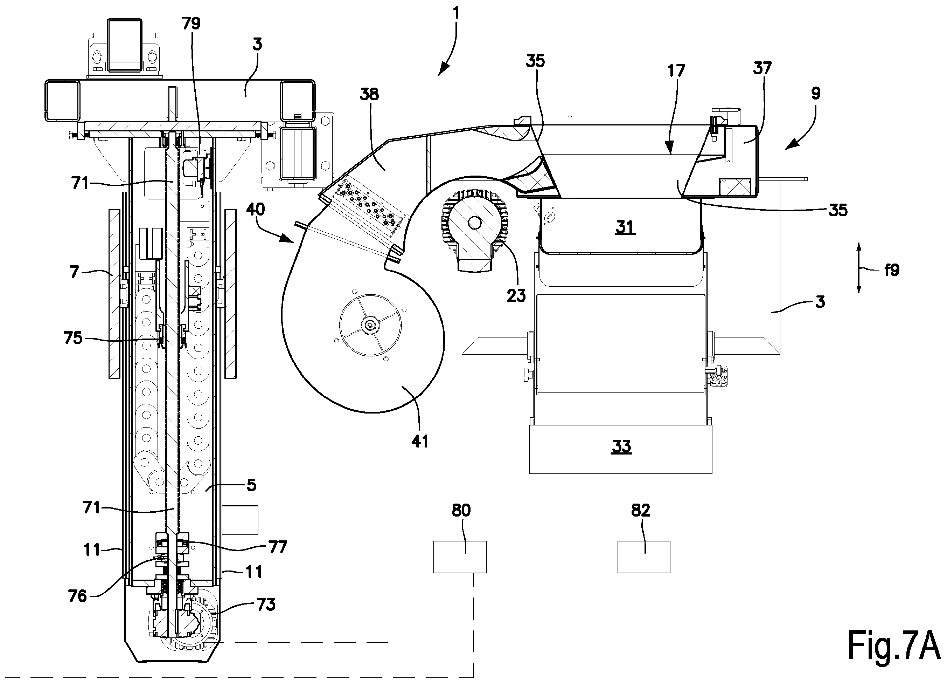

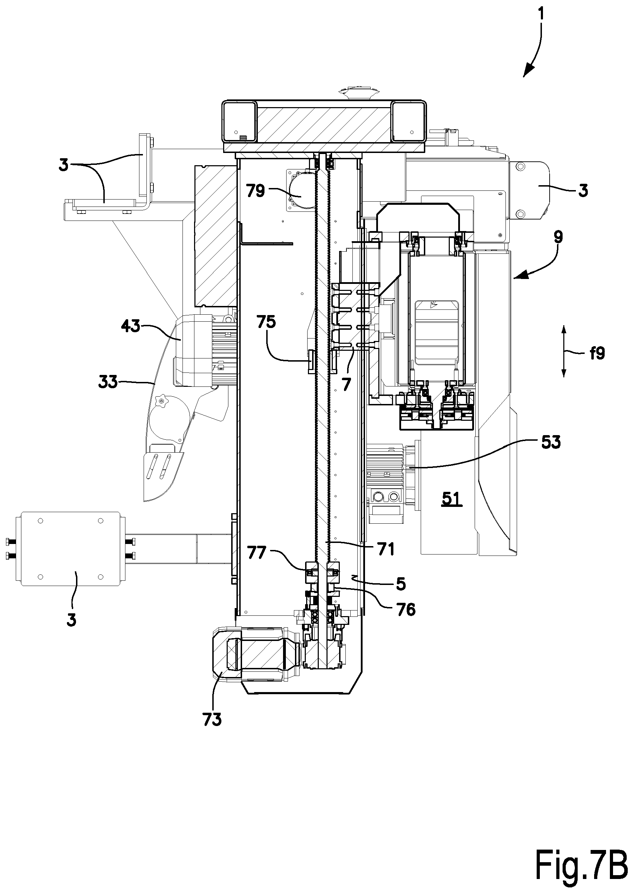

The operative position of the operating unit 9 is reached by means of a threaded bar 71 extending longitudinally in the vertical column 5, shown in Figs.7A and 7B. A motor for driving threaded bar 71 is indicated with 73.

The threaded bar 71 engages a nut screw 75 integral with the slide 7, so that the rotation of the threaded bar 71 in one direction or in the opposite direction causes a lifting or lowering movement of the slide 7 and therefore of the entire operating unit 9, to move the latter to a lower non-operative position and to an upper operative or working position. As mentioned, in the configuration of Fig.10 , in the operative position the operating unit 9 abuts against the head 65 carrying the die 61. The nut screw 75 is integral with the slide 7 slidable along the guides 11 outside the column 5. To this end, the column 5 has a longitudinal opening extending on one face of the column, through which a mechanical connection member passes which connects the nut screw 75 (inside the column) and the slide 7 (outside the column 5).

In this position, pasta is extruded through the holes 63 and is cut by the blade 19 into individual pieces, which drop by gravity through the collection chamber 13 and therefrom onto the conveyor chute 31, and then lastly transferred to the unit 33.

The air flow supplied by the first ventilation unit, comprising the fan 41 and the plenum 37, allows a regular exit of the cut pasta through the collection chamber 13 and dropping thereof toward the conveyor chute 31.

The second air flow supplied by the second ventilation unit, comprising the fan 51 and the duct 55, allows a regular conveying of the pasta along the chute 31 to the shaker or another unit 33.

The use of two separate ventilation systems, allows to optimize the air flow conditions in the two sections of the cutting machine 1, i.e., in the collection chamber 13 and along the chute 31. The flow conditions can be adjusted in terms of different parameters, such as air flow rate and temperature. These parameters can be adjusted independently for the two flows. For example, this allows to use a higher flow rate and/or a higher temperature for the flow conveyed in the collection chamber 13, and a lower flow rate and/or temperature for the flow blown along the chute 31. The value of the flow parameters can be set and managed by means of a control unit 80 (Fig.7A), which can be provided with appropriate user interfaces schematically indicated with 82, for example a monitor and a keypad, a touch-screen, a mouse and/or other suitable devices.

In advantageous embodiments, a load sensor, which may have several functions, can be associated with the above-described mechanism for adjusting the operative position of the operating unit. For example, the load sensor can detect the reaching of the position in which the operating unit 9 abuts against the head 65 carrying the die 61. Furthermore, the load sensor may be used to detect the generation of overloads on the operating unit 9, which can be generated by malfunction events of the cutting machine 1, for example by the accumulation of pasta not correctly dispensed through the die 61 or not correctly cut.

In advantageous embodiments, the load sensor may be a load cell associated with the threaded bar 71. In particular, a load cell 77 (Fig.7A, 7B) associated with a support, for example an axialbearing 76 of the threaded bar 71, may be provided.

An encoder, preferably an absolute encoder, capable of detecting the absolute position of the slide 7, for the purposes that will be clarified hereinafter with specific reference to Fig.11, may be associated with the lifting and lowering mechanism of the operating unit 9 with respect to the die. In advantageous embodiments, an encoder 79 (Fig.7A, 7B), capable of directly detecting the position of the slide 7 with respect to the vertical column 5, may be provided. The encoder 79 may be a wire encoder, with a wire anchored to the slide 7, which provides very precise measurement data and which is at the same time cost-effective.

The encoder 79 and the load cell or other load sensor 77 may be interfaced with the control unit 80 (Fig.7A). The control unit 80 is also interfaced with the motor 73 for driving the threaded bar 71,

As known, the cutting machine 1 may cooperate with accessories interposed between the die 61 and the cutting unit 15, for example in order to cut the pasta at inclined angles with respect to the longitudinal extension of the pasta extruded by the die 61.

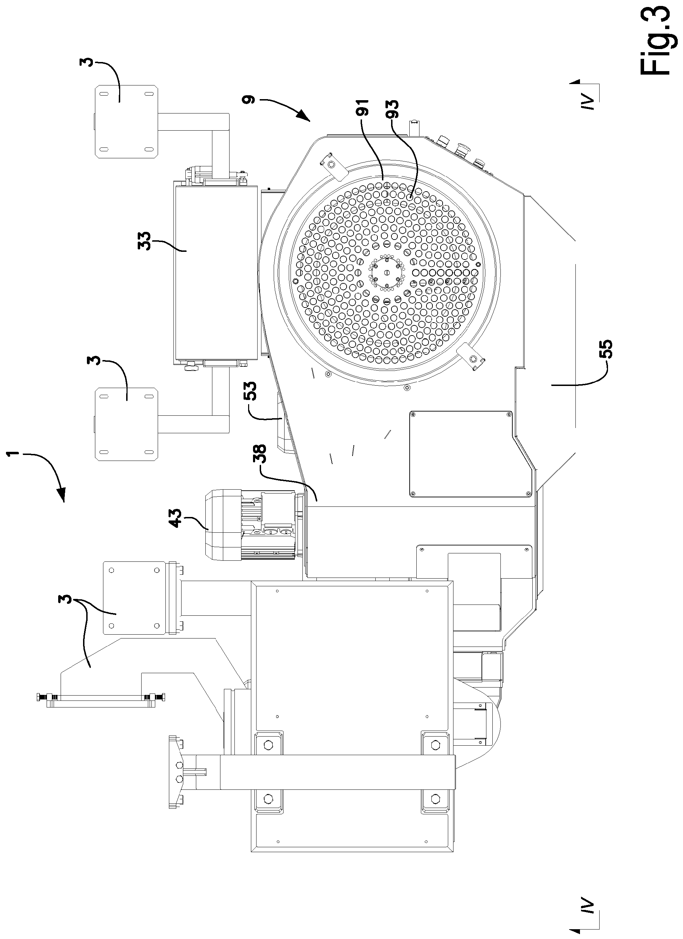

In Fig.11, the cutting machine 1 cooperates with a die 61 by means of a cutting accessory 91 interposed between the collection chamber 13 and the die 51. The cutting accessory 91 (also shown in the plan view of Fig.3, but omitted in the other figures) has a flat upper face 91A and a concave conical lower face 91B. A plurality of passages or holes 93 extend between the two faces 91A and 91B, and in the assembled configuration are aligned with the holes 63 of the die.

When the cutting accessory 91 is mounted on the cutting machine 1, the concave conical surface 91B of the cutting accessory 91 faces toward the collection chamber 13 and basically completes it at the upper part, forming the ceiling thereof. The flat surface 91A, vice versa, faces toward the output surface of the die 61 and normally at a certain distance D therefrom.

During use, pasta strands or pipes extruded by the individual holes 63 of the die 61 enter into the holes 93 of the cutting accessory 91 from the side of the upper flat surface 91A and exit from such holes at the lower conical surface 91B. Here, a specially shaped cutting blade 19, with a cutting edge lying on the lower conical surface 91A of the cutting accessory 91 cuts the pasta strands or pipes into individual pieces with ends inclined with respect to the axis of the holes 93 corresponding to the half-opening angle of the conical surface 91B, for example to produce pasta shapes of the so-called "penne" type or the like.

The air flow generated by the first ventilation unit and enters into the collection chamber 13 through the openings 35A of the frustoconical wall 35 and flows upwards through the holes 93 of the cutting accessory 91 and then impacts the volume between the flat upper surface 91A of the accessory cutting surface 91 and the output surface of the die 61. This air flow ensures that the pasta strands or pipes do not stick to the surface of the holes 93 and that the pieces of cut pasta do not stick to each other and to the conical wall 91B of the cutting accessory 91, or to the wall 37 of the collection chamber 13.

Like in the operative conditions illustrated in Fig.10, also in the operation shown in Fig.11 the air flow supplied by the first ventilation unit 40 can be adjusted, for example in terms of flow rate and/or temperature, independently with respect to the regulation of the air flow supplied by the second ventilation unit, which, like in the case described above, serves to facilitate the exit of the pasta along the chute 31 toward the shaker or another unit 33.

As noted above, the operative position of Fig. 11 is such that the upper surface 91A of the cutting accessory 91 is at a distance D from the lower surface of the die 61. In the mechanisms for moving the operating unit 9 along the column 5, load sensors (load cell 77) and position sensors (encoders 79) serve to facilitate and automate the preliminary step for positioning the operating unit 9, and in particular the upper surface 91A of he cutting accessory 91 fixed thereto, with respect to the die 61.

The positioning method may be carried out as follows. In a first step, while the die is not yet dispensing pasta, the operating unit 9 can be raised (arrow f9) until the upper flat surface 91A of the cutting accessory 90 abuts against the lower surface of the die 61 or against a surface of the head 65, to which the die 61 is fixed. This condition can be detected by means of the load cell 77.

Supply of the pasta that fills the holes 63 of the die and gradually the holes 93 of the cutting accessory 91 can begin at this point. The blade 19 is driven in rotation. When the blade 19 begins to cut the pasta pipes or strands exiting from the lower ends of the holes 93, the operating unit 9 can be gradually lowered by means of the motor 73, until the upper surface 91A of the cutting accessory 91 is brought to the desired distance D from the lower surface of the die 61. The final position can be determined with the aid of the encoder 79. Should this not be an absolute encoder, but a relative encoder, it is sufficient that it determines the downward stroke of the operating unit 9.

This allows to obtain an effective system for facilitating or even automating the positioning of the operating unit 9, and a safety level that allows to stop the dispensing of the pasta through the die 61 in case of malfunctioning, avoiding dangerous overloads on the cutting machine 1 and on the members thereof.

The dual ventilation system, for its part, allows to optimize the thermal and fluid-dynamic conditions inside the cutting machine 1, with the possibility of adapting to various operative conditions, which may depend on the type of dough used, on the shape and size of the pasta produced, or other operating parameters.

## Claims

1. A cutting machine (1) for cutting pasta, comprising:
(a) an operating unit (9) comprising:
- a cutting unit (15) having a motor-driven rotary shaft (17) with a rotation axis, on which a rotating blade (19) can be applied;
- a chamber (13) for collecting pasta cut by the cutting unit (15), comprising a side wall (35) surrounding the rotation axis of the rotary shaft (17) of the cutting unit (15); wherein the collection chamber (13) is open at the bottom to allow the cut pasta to drop;
- a conveyor device (31) underlying the collection chamber (13), adapted to receive the pasta exiting from the collection chamber (13);
(b) a substantially vertical support column (5), movable along which is the operating unit (9), the column being provided with guides (11) engaged in which is a slide (7) integrally connected to the operating unit (9);
(c) an actuating device for controlling the vertical movement of the operating unit along the column;
**characterized in that:** the actuating device comprises a threaded bar (71) supported on the column (5) and extending longitudinally therealong, driven in rotation by a motor (73), and meshing on which is a nut screw (75) integral with the slide (7); and associated with the threaded bar (71) is a load sensor (77) for detecting the load transmitted by the operating unit (9) to the column (5).

2. The cutting machine (1) of claim 1, wherein the threaded bar (71) is housed inside the column; and wherein the guides (11) are preferably arranged on the outside of the column (5).

3. The cutting machine (1) of claim 1 or 2, wherein the threaded bar (71) has an upper end and a lower end, supported on the column (5); wherein the motor (73) for actuating the threaded bar (71) is connected to the lower end of the threaded bar; and wherein the load sensor (77) is associated with a support (76) of the lower end of the threaded bar (71).

4. The cutting machine (1) of one or more of the preceding claims, comprising an encoder (79) for detecting the position of the slide (7) with respect to the column (5).

5. The cutting machine (1) of one or more of the preceding claims, comprising a control unit (80), adapted to stop the operation of the cutting machine (1) in case of overload detected by the load sensor (77).

6. An equipment for the production of pasta, comprising: a support head for an extruder (61) and a cutting machine (1) according to one or more of the preceding claims, and wherein the actuating device is configured to position the cutting machine with respect to the extrude (61).

7. The equipment of claim 6, comprising a control unit (80) adapted to detect, by means of a signal coming from the load sensor, an abutment position of the operating unit against an extruder (61) mounted on the support and a position of the operating unit at a pre-set distance with respect to the abutment position as a function of the type of pasta to be produced.

## Patentansprüche

1. Schneidemaschine (1) zum Schneiden von Teigwaren mit:
(a) einer Betriebseinheit (9) mit:
- einer Schneideeinheit (15) mit einer motorbetriebenen Drehwelle (17) mit einer Drehachse, auf der eine Drehklinge (19) angebracht werden kann,
- einer Kammer (13) zur Aufnahme von Teigwaren, die durch die Schneideeinheit (15) geschnitten wurden, mit einer Seitenwand (35), die die Drehachse der Drehwelle (17) der Schneidereinheit (15) umgibt, wobei die Sammelkammer (13) am Boden offen ist, um zu ermöglichen, das die geschnittenen Teigwaren fallen,
- einer Fördervorrichtung (31) unterhalb der Sammelkammer (13), die ausgebildet ist, um die Teigwaren, die aus der Sammelkammer (13) austreten, aufzunehmen,
(b) einer im Wesentlichen vertikalen Trägersäule (5), entlang derer die Betriebseinheit (9) bewegbar ist, wobei die Säule mit Führungen (11) versehen ist, in die ein Gleiter (7) eingreift, der integral mit der Betriebseinheit (9) verbunden ist,
(c) einer Betätigungsvorrichtung zur Steuerung der vertikalen Bewegung der Betriebseinheit entlang der Säule,
**dadurch gekennzeichnet, dass** die Betätigungsvorrichtung einen Gewindestab (71) aufweist, der auf der Säule (5) gelagert ist und sich longitudinal damit erstreckt, der in Drehung durch einen Motor (73) versetzt wird und mit einer Mutterschraube (75) kämmt, die integral mit dem Gleiter (7) ist, und wobei dem Gewindestab (71) ein Lastsensor (77) zugeordnet ist, um die Last, die von der Betriebseinheit (9) auf die Säule (5) übertragen wird, zu erfassen.

2. Schneidemaschine (1) nach Anspruch 1, wobei der Gewindestab (71) innerhalb der Säule aufgenommen ist und wobei die Führungen (11) vorzugsweise außerhalb der Säule (5) angeordnet sind.

3. Schneidemaschine (1) nach Anspruch 1 oder 2, wobei der Gewindestab (71) ein oberes Ende und ein unteres Ende aufweist, die auf der Säule (5) getragen werden, wobei der Motor (73) zur Betätigung des Gewindestabs (71) mit dem unteren Ende des Gewindestabs verbunden ist und wobei der Lastsensor (77) einem Träger (76) des unteren Endes des Gewindestabs (71) zugeordnet ist.

4. Schneidemaschine nach einem oder mehreren der vorstehenden Ansprüche mit einem Kodierer (79) zur Erfassung der Position des Gleiters (7) mit Bezug auf die Säule (5).

5. Schneidemaschine (1) nach einem oder mehreren der vorstehenden Ansprüche mit einer Steuereinheit (80), die ausgebildet ist, um den Betrieb der Schneidemaschine (1) für den Fall zu beenden, dass eine Überlast durch den Lastsensor (77) erfasst wird.

6. Ausstattung für die Herstellung von Teigwaren mit einem Trägerkopf für einen Extruder (61) und einer Schneidemaschine (1) nach einem oder mehreren der vorstehenden Ansprüche, und wobei die Betätigungsvorrichtung ausgebildet ist, um die Schneidemaschine mit Bezug auf den Extruder (61) zu positionieren

7. Ausstattung nach Anspruch 6 mit einer Steuereinheit (80), die ausgebildet ist, um mittels eines Signals von dem Lastsensor eine Anschlagposition der Betriebseinheit gegen einen Extruder (61) zu erfassen, der auf dem Träger montiert ist, und einer Position der Betriebseinheit an einer voreingestellten Distanz mit Bezug auf die Anschlagposition als Funktion der Art von Teigwaren, die zu produzieren sind.

## Revendications

1. Une machine de découpe (1) pour découper des pâtes, comprenant :
(a) une unité opérationnelle (9) comprenant :
- une unité de découpe (15) ayant un arbre rotatif entraîné par un moteur, avec un axe de rotation, sur lequel une lame tournante (19) peut être appliquée ;
- une chambre (13) de collecte des pâtes découpées par l'unité de découpe (15), comprenant une paroi latérale (35) entourant l'axe de rotation de l'arbre rotatif (17) de l'unité de découpe (15) ; dans lequel la chambre de collecte (13) est ouverte au fond pour permettre aux pâtes coupées de tomber ;
- un dispositif de transport (31) situé en dessous de la chambre de collecte (13), apte à recevoir les pâtes sortant de la chambre de collecte (13) ;
(b) une colonne de support sensiblement verticale (5), le long de laquelle l'unité opérationnelle (9) est mobile, la colonne étant pourvue de guides (11) dans lesquels un coulisseau (7) est engagé, connecté solidairement à l'unité opérationnelle (9) ;
(c) un dispositif d'actionnement pour commander le mouvement vertical de l'unité opérationnelle le long de la colonne ;
**caractérisée en ce que :** le dispositif d'actionnement comprend une barre filetée (71) supportée sur la colonne (5) et s'étendant longitudinalement le long de celle-ci, entraînée en rotation par un moteur (73) et sur laquelle est vissé un écrou (75) solidaire du coulisseau (7) ; et un détecteur de charge (77) est associé à la barre filetée (71) pour détecter la charge transmise par l'unité opérationnelle (9) à la colonne (5).

2. La machine de découpe (1) selon la revendication 1, dans laquelle la barre filetée (71) est logée à l'intérieur de la colonne et dans laquelle les guides (11) sont de préférence agencés à l'extérieur de la colonne (5).

3. La machine de découpe (1) selon la revendication 1 ou 2, dans laquelle la barre filetée (71) a une extrémité supérieure et une extrémité inférieure, supportées sur la colonne (5) ; le moteur (73) d'entraînement de la barre filetée (71) étant connecté à l'extrémité inférieure de la barre filetée ; et le détecteur de charge (77) étant associé à un support (76) de l'extrémité inférieure de la barre filetée (71).

4. La machine de découpe (1) selon l'une ou plusieurs des revendications précédentes, comprenant un encodeur (79) pour détecter la position du coulisseau (7) par rapport à la colonne (5).

5. La machine de découpe (1) selon l'une ou plusieurs des revendications précédentes, comprenant une unité de commande (80), apte à arrêter le fonctionnement de la machine de découpe (1) au cas où une surcharge est détectée par le détecteur de charge (77).

6. Un équipement pour la production de pâtes, comprenant : une tête de support pour une extrudeuse (61) et une machine de découpe (1) selon l'une ou plusieurs des revendications précédentes, et dans laquelle le dispositif d'actionnement est configuré pour positionner la machine de découpe par rapport à l'extrudeuse (61).

7. L'équipement selon la revendication 6, comprenant une unité de commande (80) apte à détecter, au moyen d'un signal provenant du détecteur de charge, une position de butée de l'unité opérationnelle contre une extrudeuse (61) montée sur le support et une position de l'unité opérationnelle à une distance prédéfinie par rapport à la position de butée en fonction du type de pâtes à produire.
